# EUROPEAN PATENT APPLICATION

(11) **EP 4 718 140 A1**
(43) Date of publication of application: **01.04.2026**
(21) Application number: 25204746.9
(22) Date of filing: 25.09.2025
(51) Int. Cl.: G02B 26/06, G02B 26/08, G02B 27/09, B23K 26/00

(54) **DEVICE FOR MODULATING A LASER BEAM AND METHOD FOR MODULATING A LASER BEAM**

(30) Priority: 25.09.2024 IT 202400021362
(71) Applicant: Dynamic Optics S.r.l., 36030 Sarcedo (VI) (IT)
(72) Inventor: BONORA, Stefano, 35127 Padova (PD) (IT)
(74) Representative: Caldon, Giuliano

(57) **Abstract**

Device for modulating a laser beam, comprising a deformable mirror (2) provided with a reflective surface (21) adapted to receive an incident laser beam (101) and to reflect a corresponding reflected laser beam (102) provided with an output wavefront (FU) and actuator means operatively associated with said reflective surface (21) and actuatable for deforming said reflective surface (21). The modulation device (1) also comprises detection means (3) provided with an electromagnetic radiation source (31) adapted to emit a control beam (311) incident on the reflective surface (21), and a wavefront sensor (32) placed to intercept the reflected control beam (312) reflected by the reflective surface (21) in order to detect measurements of the wavefront of the reflected control beam (312) itself and generating corresponding measurement signals (Sm). In addition, the modulation device comprises a logic control unit (4), which receives the measurement signals (Sm), is arranged for associating the latter with corresponding forms of the output wavefront (FU) of the reflected laser beam (102), is operatively connected to the actuator means in order to actuate them to deform the reflective surface (21) in order to feedback control the form of the output wavefront (FU) of the reflected laser beam (102).

## Description

### Field of application

The present invention regards a device for modulating a laser beam and a method for modulating a laser beam according to the preamble of the respective independent claims.

The present modulation device is intended to be used in laser apparatuses for the execution of processing, such as for example a 3D printer (whether this is a resin printer or a sintering device) or a laser cutting machine. **In** particular, the modulation device is adapted to receive a laser beam and a modulate such beam, re-emitting it such to modify an output profile thereof in an optimal manner, in order to execute a specific operation.

Therefore, the present modulation device is inserted in the field of production of optical instruments for laser applications and in the field of production of components for laser apparatuses for the execution of laser processing.

### State of the art

Known on the market are laser apparatuses, such as for example 3D printers or laser cutting machine, which employ a laser beam in order to execute specific operations for the attainment of a processed object or a semifinished object. **In** particular, in the case of 3D additive printers, the laser beam is employed for solidifying the raw material (such as for example liquid resin or metallic powder) forming, layer after layer, a three-dimensional object, while in the case of laser cutting machines, the laser beam is employed for executing a quick and precise cutting of a semifinished element such as a metallic sheet, with increased quality and lower defect quantity.

The laser apparatuses of known type comprise in general a laser source, which emits a constant or pulsed laser beam (in terms of power and wavefront). Such laser beam is controlled with a device for modulating the laser beam, which receives, from the laser source, the aforesaid laser beam, modulating the wavefront thereof before re-emitting it, in particular, with an output wavefront that is different from the input wavefront with which it is emitted by the laser source. In particular, the modulation of the wavefront of the laser has the function of optimizing the laser beam employed by the laser apparatus on the basis of the specific operation to be executed. This method allows generating any form of the laser beam. One possible application is, for example, in a 3D printer, in which, when the latter must attain an object with details with small dimensions, the modulation device emits the laser beam with a flat wavefront such to minimize the size of the focal spot on the piece to be processed; when the 3D printer must make an object (or a portion of the latter) that is "solid", the modulation device can modulate the wavefront of the laser beam in a manner such to process a wider portion of the material. For example, the modulation device can emit the laser beam with a cylindrical wavefront, in a manner such to create, on the focal plane, a spot of elongated shaped such to create, on the focal plane, a spot of elongated form that is able to process multiple material, or with a wavefront such that the intensity distribution of the focal spot has a flat top or ring profile.

The modulation devices of known type comprise a deformable mirror provided with a reflective surface adapted to reflect the incident laser beam, reflecting it with an output wavefront which depends in substance from the form of the reflective surface, and actuator means actuatable for modifying the form of the reflective surface, thus controlling the output wavefront of the laser beam.

Generally, the modulation devices of known type comprise detection means, which are adapted to measure the output wavefront of the reflected laser beam from the deformable surface. In particular, the data detected by the detection means are generally employed in order to feedback control the form of the reflective surface of the deformable mirror in order to obtain a target output wavefront determined on the basis of the operating needs of the laser apparatus, as briefly described above.

The detection means of the known modulation devices comprise a beam splitter placed to intercept the reflected laser beam of the reflecting surface, and configured for reflecting a small portion (generally on the order of 0.1-10%) of the laser beam along a detection direction and to transmit the remaining laser beam reflected by the reflective surface without disturbing it.

In addition, the detection means comprise a wavefront sensor placed to intercept the aforesaid detection direction and configured for measuring the output wavefront of the laser beam reflected by the reflective surface coming from the beam splitter.

One example of a modulation devices of the abovementioned type is described in document CN 102707434 B.

The laser beam modulation devices described briefly above have in practice revealed that they are not free of drawbacks.

The main drawback lies in the fact that, in high-power laser applications (e.g. around 1-4 kW), the measurement of the wavefront, using the "power" laser beam (it being intended with such term the laser beam intended to execute the processing), can lead to errors of detection which, in the case of high-precision laser processing operations, can translate into a reduction of the quality of the processing itself.

Indeed, since the power laser beam used for the laser processing operations can sustain power variations that depend directly on the type of processing which must be executed, such power variation can affect the measurement of the wavefront sensor, such in particular must be adapted to the change of power of the laser beam, causes size errors or lateness in the same.

In addition, as a function of the processing to be executed, the power laser beam is not necessarily always turned on, but can be subjected to on and off cycles. In such situation, during the turning on of the power laser beam, the wavefront sensor is not capable of detecting the form of the reflective surface until the laser beam itself reaches the wavefront sensor itself, thus introducing a time latency in the determination of the form of the reflective surface and in its control, which can lead to an error in the laser processing and a reduction of the quantity thereof.

### Presentation of the invention

**In** this situation, the problem underlying the present invention is to overcome the drawbacks manifested by the prior art up to now, by providing a device for modulating a laser beam and a method for modulating a laser beam, which allow precisely and reliably modulating the laser beam, also with high-power laser.

Further object of the present invention is to provide a device for modulating a laser beam, which is simple and inexpensive to attain.

Further object of the present invention is to provide a device for modulating a laser beam and a method for modulating a laser beam, which allow eliminating the possible latency in the modulation of the laser beam due to the step of turning on the laser beam itself.

Further object of the present invention is to provide a device for modulating a laser beam and a method for modulating a laser beam, which ensure a high production efficiency and a high production quality.

Further object of the present invention is to provide a device for modulating a laser beam and a method for modulating a laser beam, which ensure a high operating flexibility.

Further object of the present invention is to provide a device for modulating a laser beam, which is structurally simple and entirely reliable in operation.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent several merely exemplifying and non-limiting embodiments of the invention, in which:
- figure 1 shows a schematic view of the modulation device, object of the present invention, in accordance with a first embodiment;
- figure 2 shows a detail of the modulation device represented in figure 1, relative to a reflective surface of a deformable mirror of the device itself;
- figure 3 shows a front view of the reflective surface of figure 2;
- figures 4a-4d represent examples of possible forms of a profile of a laser beam reflected by the deformable mirror;

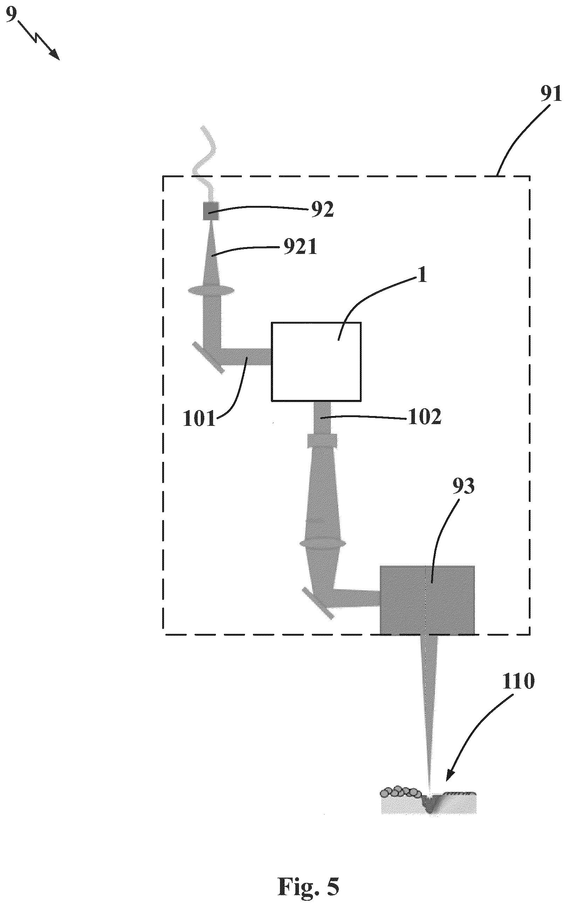

- figure 5 shows a schematic view of a laser apparatus, object of the present invention;
- figure 6 shows a schematic view of the modulation device, object of the present invention, in accordance with a second embodiment.

### Detailed description of a preferred embodiment

With reference to the drawings, reference number 1 overall indicates an embodiment of a device for modulating a laser beam, object of the present invention.

The present modulation device 1 is intended to be advantageously employed in a laser apparatus 9 (discussed in greater detail hereinbelow), such as for example a laser printer or a laser cutting machine, so as to adjust the wavefront of a laser beam generated at the output of the apparatus as a function of the operating needs of the apparatus itself.

The modulation device 1, object of the present invention, comprises a deformable mirror 2 provided with a reflective surface 21, which is adapted to receive an incident laser beam 101, advantageously provided with an input wavefront FI, and to reflect a corresponding reflected laser beam 102 provided with an output wavefront FU.

The reflected laser beam 102 is intended to be directed from the apparatus, in which the modulation device 1 is mounted, onto a work surface 110 on which the processing must be mounted.

In particular, by "wavefront" of a laser beam it is intended the imaginary surface that connects all the points of the laser beam which are in phase with each other. In this context, since the incident laser beam 101 is reflected by the reflective surface 21 of the deformable mirror 2, the output wavefront FU of the reflected laser beam 102 is determined by the form of the reflective surface 21 itself.

In a per se known manner, the wavefront of the laser beam determines the power distribution of the laser beam on the work surface 110 and the geometric form of the spot laser and the laser beam generates, on the work surface 110 itself (as is illustrated in the example discussed herein below).

In a per se known manner, the output wavefront FU of the reflected laser beam 102 depends in substance on the input wavefront FI of the incident laser beam 101 and on the form of the reflective surface 21 of the deformable mirror 2. Consequently, given the same input wavefront FI of the incident laser beam 101, a variation of the form of the reflective surface 21 of the deformable mirror 2 involves a consequent variation of the output wavefront FU of the reflected laser beam 102.

The deformable mirror 2 also comprises actuator means (not illustrated in the enclosed figures) operatively associated with the reflective surface 21 and actuatable for deforming, preferably in a controlled manner, the reflective surface 21 in order to control the output wavefront FU of the reflected laser beam 102.

For example, the deformable mirror 2 can be selected from among: a membrane mirror with electrostatic actuation (which uses electrostatic fields in order to control the deformation of the reflective surface), a piezoelectric actuation mirror (which exploits the mechanical deformation of piezoelectric materials, in response to electric fields in order to obtain a deformation of the reflective surface), a mirror with magnetic actuators (which uses magnetic fields in order to control the deformation of the reflective surface) or any one other type of deformable mirror 2 of known type.

The structure (in particular the reflective surface and the actuator means) and the operation of deformable mirrors are well known to the man skilled in the art, and for this reason they will not be discussed in more detail hereinbelow.

The modulation device 1 comprises detection means 3 comprising an electromagnetic radiation source 31 adapted to emit a control beam 311 incident on the reflective surface 21, which is adapted to reflect a corresponding reflected control beam 312.

In particular, the incident laser beam 101 is emitted by a laser source 92 which is separate from the electromagnetic radiation source 31 that generates the incident control beam 311.

More particularly, in this manner, the incident control beam 311 is not obtained from a portion of the incident laser beam 101 or of the reflected laser beam 102 (as instead occurs in the abovementioned prior art).

Thus, the incident control beam 311 and the incident laser beam 101 are entirely separate from each other, being in particular generated by different sources.

Advantageously, the incident control beam 311 hits the reflective surface 21 of the deformable mirror 2 simultaneously with the incident laser beam 101.

In addition, the detection means 3 comprise a wavefront sensor 32, which is placed to intercept the reflected control beam 312 in order to detect measurements of the wavefront of the reflected control beam 312 itself and generating corresponding measurement signals Sm.

The detection means 3, and in particular the wavefront sensor 32, is not intercepted by the incident laser beam 101 and by the reflected laser beam 102.

In a manner similar to that reported above, the wavefront of the reflected control beam 312 in substance depends on the wavefront of the incident control beam 311 and on the form of the reflective surface 21 of the deformable mirror 2.

Preferably, the electromagnetic radiation source 31 emits the incident control beam 311 with the wavefront constant. In this manner, the only variable capable of varying the wavefront of the reflected control beam 312 is the form of the reflective surface 21 of the deformable mirror 2. In such situation, therefore, the measurement signals Sm generated by the wavefront sensor 32 are representative of the form of the reflective surface 21 of the deformable mirror 2. In other words, in such situation, the detection means 3 are configured in order to detect, in an indirect manner, the form of the reflective surface 21 of the deformable mirror 2, in particular detecting the variation of the wavefront induced by the reflective surface 21 onto the incident control beam 311, reflecting it as reflected control beam 312.

The modulation device 1, object of the present invention, also comprises a logic control unit 4, which is in data connection with the wavefront sensor 32 in order to receive the aforesaid measurement signals Sm and is arranged for associating the latter with corresponding forms of the output wavefront FU of the reflected laser beam 102.

Advantageously, the logic control unit 4 comprises a calculation module configured for calculating, starting from the aforesaid measurement signals Sm of the wavefront sensor 32, form parameters PF indicative of the form of the deformable surface 21.

Advantageously, the calculation module of the logic control unit 4 is configured for calculating, starting from the aforesaid form parameters PF, and preferably starting from the input wavefront FI of the incident laser beam 101 (if this is known), the corresponding form of the output wavefront FU of the reflected laser beam 102, this associating the aforesaid measurement signals Sm with corresponding forms of the output wavefront FU of the reflected laser beam 102.

Preferably, the aforesaid form parameters PF are the Zernike coefficients associated with the deformable surface 21 of the deformable mirror 2. The Zernike coefficients and their use for the determination of the form of the reflective surface 21 of the deformed mirror 2 and of the aberrations introduced by the reflective surface 21 on the output wavefront FU of the reflected laser beam 102 are well known to the man skilled in the art and, thus, they will not be discussed in more detail hereinbelow.

The logic control unit 4 is operatively connected to the actuator means in order to actuate the latter to deform the reflective surface 21 in order to feedback control the form of the output wavefront FU of the reflected laser beam 102.

In this manner, with the modulation device 1, object of the present invention, it is possible to feedback control the output wavefront FU of the reflected laser beam 102 by using the control beams 311, 312 which do not depend on the power of the laser beams 101, 102 required by the specific application. In this manner, the electromagnetic radiation source 31 can be arranged for generating beams of electromagnetic waves with power (even relatively low power) such to be able to received and processed by the detection means 3 without creating operating problems with the latter. In particular, the control of the output wavefront FU of the reflected laser beam 102 is obtained without the detection means 3 being directly hit by the reflected laser beam 102. Such characteristic results extremely advantageous in the case of application with a high-power incident laser beam 101 (e.g. one or more kW). Indeed, in such context, the fact that the reflected beam 102 does not interact with the detection means 3 of the modulation device 1 allows maintaining the control of the form of the reflective surface 21 of the deformable mirror and hence of the output wavefront FU of the reflected laser beam 102, in a manner that is continuative and independent of the power of the incident laser beam 101. A further advantage is that the form of the reflective surface 21 is always controlled also during the steps of turning on and off of the incident laser beam 101. In other words, with the modulation device 1, object of the present invention, it is possible to control the form of the reflective surface 21 even when the incident laser beam 101 is absent (turned off).

In this manner, the modulation device 1, object of the present invention, allows modulating a laser beam by actively controlling the output wavefront FU thereof with high precision in a manner substantially independent of the power of the incident laser beam 101.

Advantageously, the logic control unit 4 is arranged for setting at least one target wavefront of the reflected laser beam 102, comparing the target wavefront with the forms of the output wavefront FU associated with the measurement signals Sm and actuating the actuator means on the basis of the aforesaid comparison in order to deform the reflective surface 21 so to bring the form of the output wavefront FU of the reflected laser beam 102 to the target wavefront.

In particular, the actuator means are commanded to vary the form of the reflective surface 21 of the deformable mirror 2 until the form of the output wavefront FU (provided by the measurement signals Sm) coincides with the target wavefront (possibly except for preset tolerances).

In this manner, with the modulation device 1, object of the present invention, it is possible to obtain a specific desired wavefront of the reflected laser beam 102 at the output from the modulation device 1 itself, both in terms of profile of the reflected laser beam 102 and power distribution, ensuring optimal performances for technical applications which require a precise control of the output wavefront FU of the reflected laser beam 102.

The logic control unit 4 is configured in order to actuate the actuator means to deform the reflective surface 21 on the basis of the measurement signals Sm generated by the wavefront sensor 32 in order to feedback control the form of the output wavefront FU of the reflected laser beam 102, preferably in accordance with a completely automatic functioning logic on the basis of the operating needs of the laser apparatus 9 on which the modulation device 1 it intended to be employed.

Optionally, the modulation device 1 comprises a user interface (possibly integrated in the apparatus in which the modulation device 1 is applied) in data connection with the logic control unit 4 for the insertion of input parameters representative of the desired target wavefront of the reflected laser beam 102.

Preferably, the input parameters comprise at least the incidence angle and/or the desired aberration coefficients of the profile of the reflected laser beam 102. Advantageously, the input parameters comprise coefficients indicative of the power distribution and of the profile of the reflected laser beam 102 at the work surface 110.

In this manner, with the modulation device 1, object of the present invention, it is possible to select the form of the profile of the reflected laser beam 102 on the work surface 110.

For example, in a per se known manner, the reflective surface 21 of the deformable mirror 2 can be flat, thus generating a circular spot laser on the work surface 110, or have a spherical form which can axially move the position of such spot laser with respect to the work surface 110, or have a circular form that generates, on the work surface, a spot laser with elongated form (in particular, by varying the parameters of the cylindrical form of the reflective surface 21 it is possible to vary the ellipticity of the spot laser on the work surface 110).

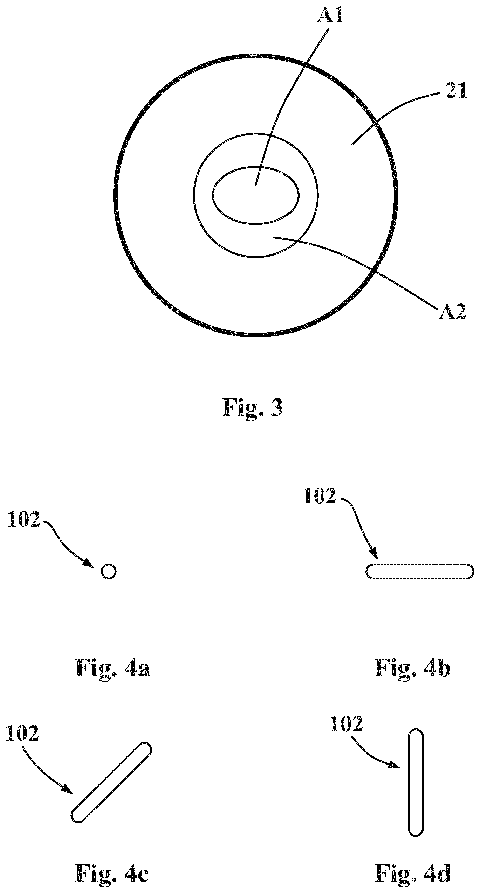

For example, with reference to figures 4a-4d, it is possible to select a point-like profile (aspect ratio between greater and smaller axis equal to 1) or elongated linear profile (aspect ratio much greater than 1) and the azimuthal angle of the greater axis (e.g. in figure 4b it is 0 degrees, in figure 4c it is 45 degrees and in figure 4d it is 90 degrees).

In particular, by azimuthal angle it is intended the orientation of the profile of the reflected laser beam 102 on the work surface 110 around the direction along which the latter is propagated. For example, with reference to figures 4a-4b, if an elongated linear profile of the reflected laser beam 102 is selected, it is possible to select the tilt of the profile itself of the reflected laser beam 102 on a plane orthogonal to the propagation direction of the reflected beam 102.

For example, the reflective surface 21 of the deformable mirror 2 can have a form such to generate, on the work surface 110, a spot laser with uniform power distribution ("top hat") in which the power is uniformly distributed over the entire transverse section of the reflected laser beam 102 with a sudden fall of power at the edges.

Advantageously, the logic control unit 4 is configured for calculated the target wavefront used by said logic control unit 4 itself in order to implement the feedback control of the output wavefront FU of the reflected laser beam 102. Preferably, the logic control unit 4 calculates the target wavefront on the basis of the automatic functioning logic or on the basis of the input parameters inserted by means of the aforesaid user interface.

In this manner, with the modulation device 1, object of the present invention, it is possible to control the actual form of the desired output wavefront FU of the reflected laser beam 102 by inserting, by means of the user interface, the input parameters which represent, in a simplified manner, the profile and the power distribution of the reflected laser beam 102 itself, considerably increasing the simplicity of use for an operator.

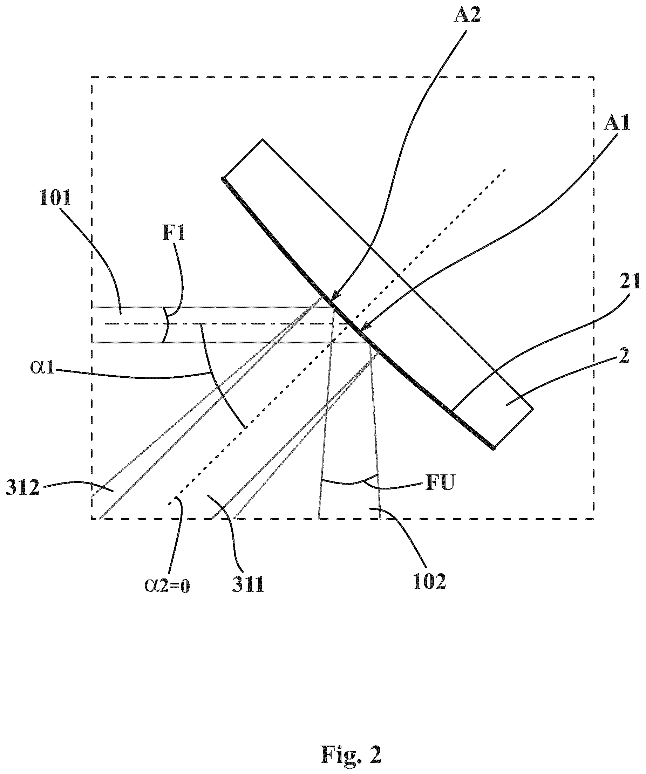

Advantageously, with reference to figures 2 and 3, the incident laser beam 101 intercepts the reflective surface 21 of the deformable mirror 2 on a first reflection area A1. Preferably, the output wavefront FU of the reflected laser beam 102 depends (given the same input wavefront FI of the incident laser beam 101) only on the deformation of the first reflection area A1 of the deformable surface 21.

Preferably, the incident control beam 311 intercepts the reflective surface 21 of the deformable mirror 2 on a second reflection area A2. Advantageously, the wavefront of the reflected control beam 312 depends (given the same wavefront of the incident control beam 311) only on the deformation of the second reflection area A2 of the deformable surface 21.

Advantageously, the second reflection area A2 is superimposed on the first reflection area A1 and preferably has extension greater than or equal to the first reflection area A1 itself. In particular, the second reflection area A2 coincides with or is more extensive than the first reflection area A1.

In this manner, since the detection means 3 are configured in order to detect the deformation of the second reflection area A2 of the reflective surface 21 (in particular by detecting the wavefront of the control beam 312 reflected by this) completely superimposed on (and coincides with or is more extensive than) the first reflection area A1 of the reflective surface 21 on which the incident laser beam 101 is reflected, the detection means 3 are capable of detecting the deformation of the entire first reflection area A1 itself from which, as discussed above, the output wavefront FU of the reflected laser beam 102 in substance depends.

Advantageously, with reference to figure 2, the reflective surface 21 of the deformable mirror 2 is arranged for receiving the incident laser beam 101 with a first incidence angle α1, and for receiving the incident control beam 311 with a second incidence angle α2 different from the first incidence angle α1, and preferably smaller than the first incidence angle α1.

By incidence angle, it is intended the angle comprised between the direction along which the incident beam is propagated and the line orthogonal to the reflective surface 21 in the incidence point.

The difference between the first incidence angle α1 and the second incidence angle α2 allows the reflected laser ray 102 and the reflected control beam 312 to be propagated in two directions that are different from each other. In this manner, the wavefront sensor 32 of detection means 3 is arranged substantially spaced with respect to the reflected laser beam 102.

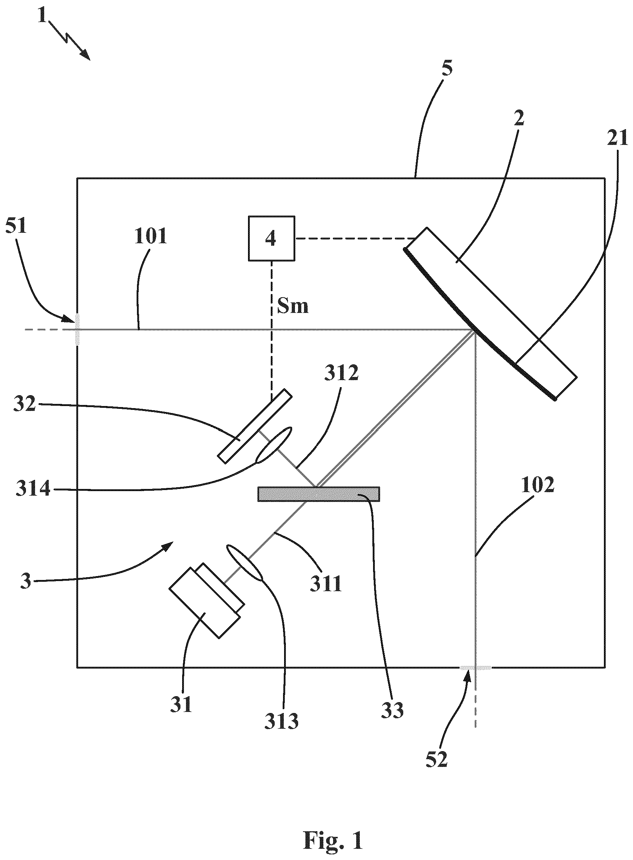

Preferably, in accordance with a first embodiment represented in figures 1 and 2, the second incidence angle α2 is substantially equal to zero degrees. In other words, the incident control beam 311 is propagated in a manner perpendicular to the reflective surface 21 of the deformable mirror 2.

Advantageously, the detection means 3 comprise a beam divider 33 (known in the technical jargon with the term "beam splitter"), which is placed to intercept the incident control beam 311 and the reflected control beam 312, and is configured for transmitting the incident control beam 311 towards the reflective surface 21 with the aforesaid second incidence angle α2, and for reflecting the reflected control beam 312 towards the wavefront sensor 32.

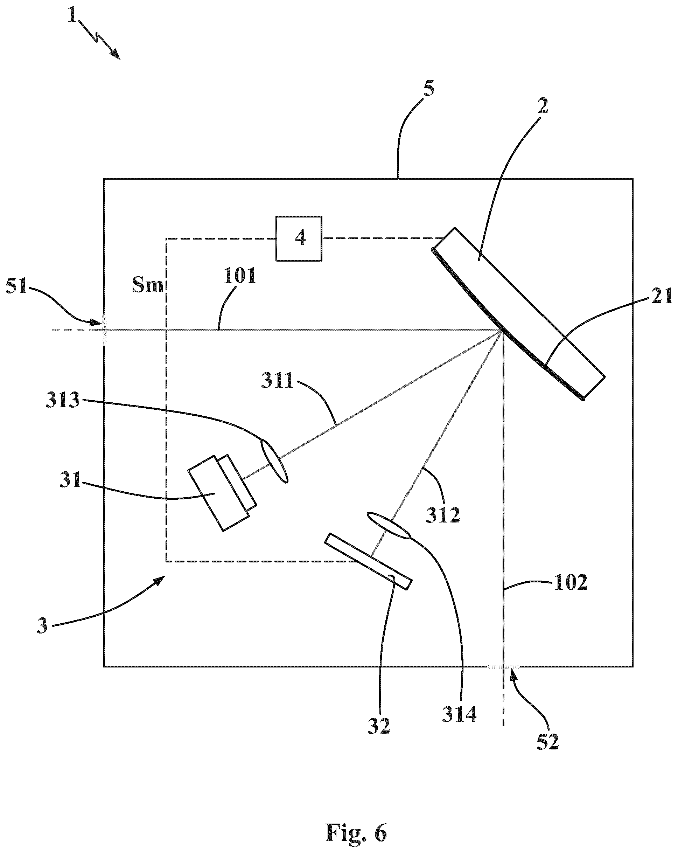

According to a second embodiment represented in figure 6, the second incidence angle α2 is different from zero degrees. In such second embodiment, the reflected control beam 312 is propagated starting from the reflective surface 21 of the deformable mirror 2 along a direction that is different from the direction along which the incident control beam 311 reaches the incident surface 21. Advantageously, in such second embodiment, the presence of the beam divider 33 is not necessary.

Advantageously, the electromagnetic radiation source 31 of the detection means 3 is a laser source and, preferably, the incident control beam 311 is a coherent and collimated monochromatic light beam (i.e. a laser beam).

Preferably, the electromagnetic radiation source 31 is arranged for emitting the incident control beam 311 with a power smaller than or equal to 10 mW, more preferably smaller than or equal to 5 mW and still more preferably smaller than or equal to 1 mW.

In this manner, the low power of the incident control beam 311 allows the reflected control beam 312 perturbing the wave sensor 32 of the detection means 3 in a minimal manner, thus ensuring high operating precision for the wave sensor 32 itself.

Advantageously, with reference to figure 1, the modulation device 1 comprises a support structure 5, which carries, the deformable mirror 2 and the detection means 3 fixed thereto.

Preferably, the support structure 5 has substantially box-like form and is provided with containment walls that define an internal cavity, within which the deformable mirror 2 and the detection means 3 are placed. In this manner, during use, the deformable mirror 2 and the detection means 3 are substantially isolated from the ambient light, dust and other pollutant agents such to reduce the optical noise of the sensor of the wavefront 32, increasing the accuracy thereof and hence increasing the accuracy of the feedback control of the output wavefront FU of the reflected laser beam 102.

Advantageously, the support structure 5 comprises an inlet opening 51, attained on one of the containment walls, through which the incident laser beam 101 is susceptible of entering into the internal cavity.

Preferably, the support structure 5 comprises an outlet opening 52, attained on one of the containment walls, through which the reflected laser beam 102 is susceptible of exiting from the internal cavity.

Advantageously, the modulation device 1 comprises a first optical system 313, which is placed to intercept the incident control beam 311 and is arranged for varying the transverse size of the latter (i.e. the size of a section of the incident control beam 311 on a plane orthogonal to its projection direction).

In particular, such first optical system 313 has the object of adjusting the second reflection area A2 of the incident control beam 311 on the reflective surface 21 of the deformable mirror 2.

For example, the first optical system 313 comprises, in a per se known manner, a diopter group formed by multiple lenses in succession.

Preferably, the modulation device 1 comprises a second optical system 314, which is placed to intercept the reflected control beam 312 and is arranged for varying the transverse size of the latter (i.e. the size of a section of the reflected control beam 312 on a plane orthogonal to its projection direction).

In particular, the second optical system 314 has the function of adjusting the transverse size of the reflected control beam 312 in order to adapt it to the dimensions of the wavefront sensor 32.

For example, the second optical system 314 comprises, in a per se known manner, a diopter group formed by multiple lenses in succession.

Also forming the object of the present invention is a laser apparatus 9. For example, the laser apparatus is a 3D printer configured for attaining objects, even with complex form, starting from a liquid material (polymer resin) or granular material (metallic powder) by means of the action of a laser beam, in particular by means of crosslinking or melting. Alternatively, the laser apparatus 9 is for example a laser cutting machine, which is configured for cutting, perforating or welding metal sheets by means of the action of a laser incident on the same, or a laser welder. In a per se known manner, for such laser apparatuses 9, the control of the laser beam adapted to execute the processing is a parameter of primary importance for obtaining an object (in the case of 3D printer) or a cutting (in the case of laser cutting machine) in a quick and precise manner, lacking defects and that can adapt the laser to the form of the piece to be cut/weld.

The present laser apparatus 9 comprises a support frame 91, preferably adapted to be abutted against the ground, and a laser source 92, mechanically connected to the support frame 91 and arranged for emitting a laser beam 921.

Advantageously, the laser source 92 is arranged for emitting the aforesaid laser beam 921 with a constant wavefront.

In addition, the laser apparatus 9 comprises a modulation device 1 of the above-described type, regarding which the same reference numbers will be maintained for the sake of greater description clarity.

The modulation device 1 is mechanically mounted on the support frame 91 and is arranged for receiving the laser beam 921 (emitted by the laser source 92) as incident laser beam 101 and to emit at the output the reflected laser beam 102.

In this manner, with the laser apparatus 9, object of the present invention, it is possible to feedback control the form of the output wavefront FU of the laser beam 102 on the basis of the operating needs of the laser apparatus 9 itself.

For example, in the case of a 3D printer, when the laser apparatus 9 is attaining a portion of an object that has a high level of detail, the modulation device 1 emits the reflected laser beam 102 with a flat output wavefront FU, such to attain, on the work surface 101, a circular spot laser with minimum dimensions for being able to attain the details of the object in a precise manner. When instead the apparatus is attaining a portion of the object without particular details and "solid", the modulation device 1 emits the reflected laser beam 102 with an output wavefront FU such to generate a linear profile on the work surface 110, in particular distributing the power of the reflected laser beam 102 on a wider surface in a manner such to be able to attain such portion of the object in a quicker manner.

As discussed above, the modulation device 1 allows feedback control the form of the output wavefront FU of the laser beam 102 with a precision that is substantially independent of the operating conditions and of its power of the incident laser beam 101 (and hence of the laser beam 921 emitted by the laser source 92). In this manner, the laser apparatus 9, object of the present invention, is provided with high operating flexibility.

In addition, the laser apparatus 9 comprises an operative head 93, mounted on the support frame 91 and arranged for directing the reflected laser beam 102 on the work surface 110, preferably maintaining the aforesaid output wavefront FU unchanged.

In this manner, the operative head 93 is configured in order to receive the reflected laser beam 102 emitted by the modulation device 1 with a specific output wavefront FU and to transmit it in a predetermined direction as a function of the operating needs of the laser apparatus 9 itself. In such context, by work surface 110 it is intended the surface on which the reflected laser beam 102 is intended to act in order to execute the processing. For example, in the case of 3D printer the work surface 110 is the surface of the free surface of the liquid material (polymer resin) or granular material (metallic powder), while in the case of laser cutting machine it is the surface of the sheet to be cut.

Also forming the object of the present invention a method for modulating a laser beam.

In particular, such method can be implemented by means of the abovementioned modulation device 1.

The method, object of the present invention, provides for emitting an incident laser beam 101, preferably with an input wavefront FI, against a reflective surface 21 of a deformable mirror 2, which reflects a corresponding reflected laser beam 102 having an output wavefront FU.

For example, the incident laser beam 101 is generated by the laser source 92 of the apparatus 9 to which the modulation device 1 is applied.

In particular, as reported above, the output wavefront FU of the reflected laser beam 102 in substance depends on the input wavefront FI of the incident laser beam 101 and on the form of the reflective surface 21 of the deformable mirror 2.

In addition, the method provides for emitting, on the reflective surface 21 of the deformable mirror 2 (in particular that of the modulation device 1), an incident control beam 311 of electromagnetic radiation, which is reflected by the reflective surface 21 with a corresponding reflected control beam 312.

For example, the incident control beam 311 is generated by the electromagnetic radiation source 31 of the modulation device 1.

In particular, also in such case, the wavefront of the reflected control beam 312 depends in substance on the wavefront of the incident control beam 311 and on the form of the reflective surface 21 of the deformable mirror 2.

In addition, the method provides for detecting, by means of a wavefront sensor 32 (in particular that of the modulation device 1), measurements of the wavefront of the reflected control beam 312, generating corresponding measurement signals Sm and associating the measurement signals Sm with corresponding forms of the output wavefront FU of the reflected laser beam 102.

Advantageously, the method provides for calculating (in particular by means of the logic control unit 4 of the modulation device 1), starting from the aforesaid measurement signals Sm of the wavefront sensor 32, form parameters PF indicative of the form of the deformable surface 21. Preferably, the form parameters PF are the Zernike coefficients associated with the deformable surface 21 of the deformable mirror 2.

Advantageously, the method provides for calculating, starting from the aforesaid form parameters PF and from the input wavefront FI of the incident laser beam 101, the corresponding form of the output wavefront FU of the reflected laser beam 102, associating in this manner the aforesaid measurement signals Sm with corresponding forms of the output wavefront FU of the reflected laser beam 102.

In addition, the method provides for deforming the reflective surface 21 of the deformable mirror in order to feedback control the output wavefront FU of the reflected laser beam 102.

In this manner, with the method, object of the present invention, it is possible to feedback control the output wavefront FU of the reflected laser beam 102 by measuring the latter in an indirect manner, hence without directly detecting the reflected laser beam 102 with the wavefront sensor 32.

Such characteristic results extremely advantageous in the case of application with a high-power incident laser beam 101 (e.g. 1 kW), in such case preventing the power of the reflected laser beam 102 from compromising the precision and accuracy of the wavefront sensor 32, as already described above.

In this manner, the method, object of the present invention, allows modulating a laser beam, feedback controlling the output wavefront FU thereof with high precision in a manner substantially independent of the power of the incident laser beam 101.

Advantageously, the method provides for setting at least one target wavefront of the reflected laser beam 102, comparing the target wavefront with the forms of the output wavefront FU associated with the measurement signals Sm and actuating the actuator means on the basis of the aforesaid comparison in order to deform the reflective surface 21 in order to bring the form of the output wavefront FU of the reflected laser beam 102 to the target wavefront.

Preferably, the incident laser beam 101 intercepts the reflective surface 21 of the deformable mirror 2 on a first reflection area A1 and the incident control beam 311 intercepts the reflective surface 21 of the deformable mirror 2 on a second reflection area A2 which is superimposed on the first reflection area A1 and has extension greater than or equal to the first reflection area A1.

**In** this manner, with the method, object of the present invention, it is possible to detect the deformation of the entire the first reflection area A1 itself from which, as mentioned above, depends in substance the output wavefront FU of the reflected laser beam 102, thus increasing the precision of the feedback control of the output wavefront FU of the reflected laser beam 102.

Advantageously, the incident laser beam 101 hits the reflective surface 21 of the deformable mirror 2 with a first incidence angle α1, and the incident control beam 311 hits the reflective surface 21 with a second incidence angle α2 different from the first incidence angle α1, and preferably smaller than the first incidence angle α1.

In this manner, the difference between the first incidence angle α1 and the second incidence angle α2 allows the reflected laser ray 102 and the reflected control beam 312 to be propagated in two directions that are separated from each other, such that the wavefront sensor 32 is placed spaced with respect to the reflected laser beam 102.

The invention thus conceived therefore attains the pre-established objects.

## Claims

1. Device for modulating a laser beam, comprising:
- a deformable mirror (2) provided with:
- a reflective surface (21), which is adapted to receive an incident laser beam (101) emitted by a laser source (92) and to reflect a corresponding reflected laser beam (102) provided with an output wavefront (FU);
- actuator means operatively associated with said reflective surface (21) and actuatable for deforming said reflective surface (21) in order to control the output wavefront (FU) of said reflected laser beam (102);
- detection means (3), which comprise:
- an electromagnetic radiation source (31) adapted to emit a control beam (311) incident on said reflective surface (21), and such said reflective surface (21) is adapted to reflect a corresponding reflected control beam (312);
- a wavefront sensor (32), which is placed to intercept said reflected control beam (312) in order to detect measurements of the wavefront of said reflected control beam (312) and generate corresponding measurement signals (Sm);
- a logic control unit (4), which is in data connection with said wavefront sensor (32) in order to receive said measurement signals (Sm), is arranged for associating said measurement signals (Sm) with corresponding forms of the output wavefront (FU) of said reflected laser beam (102), is operatively connected to said actuator means in order to actuate said actuator means to deform said reflective surface (21) in order to feedback control the form of the output wavefront (FU) of said reflected laser beam (102).

2. Modulation device according claim 1, **characterized in that** said logic control unit (4) is arranged for:
- setting at least one target wavefront form of said reflected laser beam (102);
- comparing said target waveform with said forms of the output wavefront (FU) associated with said measurement signals (Sm);
- actuating said actuator means on the basis of said comparison to deform said reflective surface (21) in order to bring the form of the output wavefront (FU) of said reflected laser beam (102) to said form of the target wavefront.

3. Modulation device according claim 1 or 2, **characterized in that** said incident laser beam (101) intercepts the reflective surface (21) of said deformable mirror (2) on a first reflection area (A1) and said incident control beam (311) intercepts the reflective surface (21) of said deformable mirror (2) on a second reflection area (A2) which is superimposed on said first reflection area (A1) and has extension greater than or equal to said first reflection area (A1).

4. Modulation device according to any one of the preceding claims, **characterized in that** the reflective surface (21) of said deformable mirror (2) is arranged for receiving said incident laser beam (101) with a first incidence angle (α1), and for receiving said incident control beam (311) with a second incidence angle (α2) different from said first incidence angle (α1).

5. Modulation device according claim 4, **characterized in that** said second incidence angle (α2) is substantially equal to zero degrees.

6. Modulation device according to any one of the preceding claims, **characterized in that** said electromagnetic radiation source (31) is a laser source.

7. Modulation device according to any one of the preceding claims, **characterized in that** it comprises:
- a first optical system (313), which is placed to intercept said incident control beam (311) and is arranged for modifying the size of said incident control beam (311) on a plane transverse to the propagation direction of said incident control beam (311); and/or
- a second optical system (314), which is placed to intercept said reflected control beam (312) and is arranged for modifying the size of said reflected control beam (312) on a plane transverse to the propagation direction of said incident control beam (311).

8. Laser apparatus (9), which comprises:
- a support frame (91);
- a laser source (92), mechanically connected to said support frame (91) and arranged for emitting a laser beam (921);
- a modulation device (1) according to any one of the preceding claims, mechanically mounted on said support frame (91) and arranged for receiving said laser beam (921) as said incident laser beam (101) and to emit said reflected laser beam (102) at the output;
- an operative head (93), mounted on said support frame (91) and arranged for directing said reflected laser beam (102) on a work surface (110).

9. Method for modulating a laser beam, and such method provides for:
- emitting, by means of a laser source (92), an incident laser beam (101) against a reflective surface (21) of a deformable mirror (2), which reflects a corresponding reflected laser beam (102) having an output wavefront (FU);
- emitting, by means of an electromagnetic radiation source (31), on the reflective surface (21) of said deformable mirror (2), an incident control beam (311) of electromagnetic radiation, which is reflected by said reflective surface (21) with a corresponding reflected control beam (312);
- detecting, by means of a wavefront sensor (32), measurements of the wavefront of said reflected control beam (312) and generating corresponding measurement signals (Sm);
- associating said measurement signals (Sm) with corresponding forms of the output wavefront (FU) of said reflected laser beam (102);
- deforming said reflective surface (21) in order to feedback control the output wavefront (FU) of said reflected laser beam (102).

10. Method according claim 9, **characterized in that** said incident laser beam (101) intercepts the reflective surface (21) of said deformable mirror (2) on a first reflection area (A1) and said incident control beam (311) intercepts the reflective surface (21) of said deformable mirror on a second reflection area (A2) which is superimposed on said first reflection area (A1) and has extension greater than or equal to said first reflection area (A1).

11. Method according claim 9 or 10, **characterized in that** said incident laser beam (101) hits the reflective surface (21) of said deformable mirror (2) with a first incidence angle (α1), and said incident control beam (311) hits said reflective surface (21) with a second incidence angle (α2) different from said first incidence angle (α1), and preferably smaller than said first incidence angle (α1).
